# EUROPÄISCHE PATENTANMELDUNG

(11) **EP 1 406 034 A1**
(43) Veröffentlichungstag der Anmeldung: **07.04.2004**
(21) Anmeldenummer: 02022494.5
(22) Anmeldetag: 05.10.2002
(51) Int. Cl.: F16K 7/00, F16J 3/02

(54) **Membrananordnung für Membranventile oder Membranpumpen**

(71) Anmelder: Plastigum AG, Gummi- und Kunststoff-Fabrik, 8253 Diessenhofen (CH)
(72) Erfinder: Schmidt, Edi, 8253 Diessenhofen TG (CH)
(74) Vertreter: Weiss, Wolfgang, Dr.

(57) **Zusammenfassung**

Es wird eine Membrananordnung (1) für Membranventile und Membranpumpen vorgeschlagen, umfassend eine Membran (2), die zumindest eine Schicht (4) eines Fluorkohlenstoffmaterials aufweist und ein Verbindungs- und Führungsmittel (3) zum Verbinden und zum Führen der Membran, wobei das Verbindungs- und Führungsmittel mit einem ersten Ende (6) mit der Membran verbunden ist und mit dem zweiten Ende (7) mit einem Betätigungsorgan des Membranventils oder der Membranpumpe verbindbar ausgebildet ist, und wobei das erste Ende des Verbindungs- und Führungsmittels form- und kraftschlüssig mit einem elastisch nachgiebigeren Material als das Fluorkohlenstoffmaterial verbindbar angeordnet ist.

## Beschreibung

Die Erfindung bezieht sich auf eine Membrananordnung für Membranventile und Membranpumpen umfassend eine Membran, die auf der dem Medium ausgesetzten Seite aus einem polymeren Fluorkohlenstoffmaterial ausgebildet ist, und ein Verbindungs- und Führungsmittel zum Verbinden und zum Führen der Membran, wobei ein erstes Ende des Verbindungs- und Führungsmittels zur Verbindung mit der Membran ausgebildet ist und wobei das zweite Ende des Verbindungs- und Führungsmittels zur Verbindung mit einem Betätigungsorgan des Membranventils oder der Membranpumpe verbindbar ausgebildet ist.

Im Rohrleitungs- und Chemieanlagenbau werden Membranventile als Absperrarmaturen oder als Sicherheitsventile eingesetzt, weil sie einfach pneumatisch gesteuert werden können. Die Konstruktion ist sicher und einfach. Die Membran wird flach gegen einen einfachen Sitz im mediumsberührten Teil des Ventilgehäuses gedrückt. Das Gehäuse kann auf der Mediumsseite im wesentlichen totraumfrei konstruiert werden. Das Gehäuse weist keine Raumbereiche auf, in die das Medium eine niedrigere, das heisst eine für die Sedimentbildung günstigere Strömungsgeschwindigkeit annehmen kann. Membranventile sind deshalb besonders geeignet für Anwendungen im hochreinen und/oder sterilen Bereich. Die Membran kann von einem pneumatischen Steuermedium oder von einem Stempel, der sich auf der mediumsabgewandten Seite der Membran befindet, bewegt und auf dem Sitz angepresst werden. Um eine gute Absperrwirkung zu erreichen, soll die Membran beim Schliessen und Öffnen in einer möglichst senkrechten Richtung auf den Sitz hin und zurück bewegt werden können.

Um die Membran bei diesen Bewegungen zu führen und/oder mit dem Stempel zu verbinden, weist die Membran ein Führungs- und/oder Verbindungsmittel in der Form eines Bolzens oder eines Stiftes auf. Dieser Bolzen oder Stift ist mit einem ersten Ende mit der Membran und mit dem zweiten Ende mit einem Betätigungsoder Steuerorgan verbunden. Wenn die Membran in einer Membranpumpe eingesetzt wird, dient der Stift zur Verbindung der Membran mit dem Antriebsorgan der Membranpumpe. Die Bewegungen der Membran stellen sowohl in dem Membranventil als auch in der Membranpumpe hohe Anforderungen an die Stabilität der Verbindungsstelle zwischen der Membran und dem Stift oder dem Bolzen.

Aus der DE 24 05 607 A1 ist eine gattungsgemässe Membrananordnung mit einer Membran und einem Führungs- und Verbindungsmittel bekannt. Die Membran ist aus zwei Schichten von unterschiedlichen Werkstoffen zusammengesetzt. Die mediumsberührte Seite der Membran besteht aus einer Schicht aus Polytetrafluoräthylen (PTFE) und die Rückseite der Membran besteht aus einer Schicht aus einem elastomeren Werkstoff. Ein flanschartiges erstes Ende eines Bolzens aus Metall ist fest verbunden in der PTFE-Schicht angeordnet. Das zweite Ende ist mit dem Betätigungsorgan des Ventils verbindbar. Wenn auf der Membran Druck ausgeübt wird, kann das Elastomer nachgeben und in einem dafür vorgesehenen Raum zwischen dem als Kompressor oder Stempel ausgebildeten Betätigungsorgan des Ventils und der relativ steifen PTFE-Schicht ausweichen. Der Schaft des Bolzens kann teleskopartig durch die Elastomerschicht hindurchgleiten. Beim Zusammendrücken der Membran treten an der Verbindungsstelle zwischen der nachgiebigeren Elastomerschicht und der steiferen PTFE-Schicht Scherkräfte auf. An der Verbindungsstelle zwischen dem Bolzen mit dem Flansch aus Metall und der PTFE-Schicht der Membran wird wegen der schlechten Haftung des PTFE kein Kraftschluss, sondern lediglich ein Formschluss erreicht.

Ausgehend von diesem Stand der Technik ist es Aufgabe der Erfindung, eine Membrananordnung anzugeben, die möglichst kostengünstig herzustellen ist und wobei zwischen der Membran und dem Verbindungs- und Führungsmittel ein möglichst guter Kraftschluss erreicht wird.

Diese Aufgabe wird gelöst durch eine Membrananordnung für Membranventile und Membranpumpen umfassend eine Membran, die auf der dem Medium ausgesetzten Seite aus einem polymeren Fluorkohlenstoffmaterial ausgebildet ist, und ein Verbindungs- und Führungsmittel zum Verbinden und zum Führen der Membran, wobei ein erstes Ende des Verbindungs- und Führungsmittels zur Verbindung mit der Membran ausgebildet ist und wobei das zweite Ende des Verbindungs- und Führungsmittels zur Verbindung mit einem Betätigungsorgan des Membranventils oder der Membranpumpe verbindbar ausgebildet ist, und wobei das erste Ende des Verbindungs- und Führungsmittels form- und kraftschlüssig mit einem Material, das elastisch nachgiebiger ist als das polymere Fluorkohlenstoffmaterial, verbindbar angeordnet ist.

Bevorzugte Weiterbildungen der Erfindung ergeben sich aus den abhängigen Ansprüchen.

Es ist von Vorteil, dass die Membrananordnung einfach herzustellen ist. Dies wird dadurch erreicht, dass die Membran auf der dem Medium ausgesetzten Seite aus einer im wesentlichen gleichmässig dicken Schicht des polymeren Fluorkohlenstoffmaterials ausgebildet ist. Die Fluoropolymerschicht der Membran kann in der Form einer flachen Platte oder Folie hergestellt werden.

Es ist auch von Vorteil, dass eine möglichst feste Verbindung zwischen der Membran und dem Verbindungs- und Führungsmittel erreicht wird. Dies wird dadurch erreicht, dass das erste Ende des Verbindungs- und Führungsmittels aus Metall fest verbunden mit dem elastomeren Material im zentralen Bereich der Membran angeordnet ist. Eine feste Verbindung zwischen dem Metall und dem elastomeren Material ist einfacher herzustellen als eine entsprechend feste Verbindung zwischen Metall und Fluoropolymer.

Es ist weiter auch von Vorteil, dass in der Membrananordnung zwischen der Fluoropolymerschicht und der Elastomerschicht möglichst wenig Scherkräfte wirken, die zur Zerstörung der Verbindung führen können. Dies wird dadurch erreicht, dass das elastomere Material mit dem polymeren Fluorkohlenstoffmaterial in einem begrenzten zentralen Bereich der Membran fest verbunden angeordnet ist. Die Verbindungsfläche zwischen der Fluoropolymerschicht und der Elastomerschicht wird so klein wie möglich gehalten.

Ein Ausführungsbeispiel der Erfindung wird anhand der Figuren beschrieben. Es zeigen:
Figur 1 eine Sicht auf eine erfindungsgemässe Membrananordnung,
Figur 2 einen Schnitt durch die Membrananordnung von Figur 1 und
Figur 3 einen Schnitt durch ein weiteres Ausführungsbeispiel der Membrananordnung.

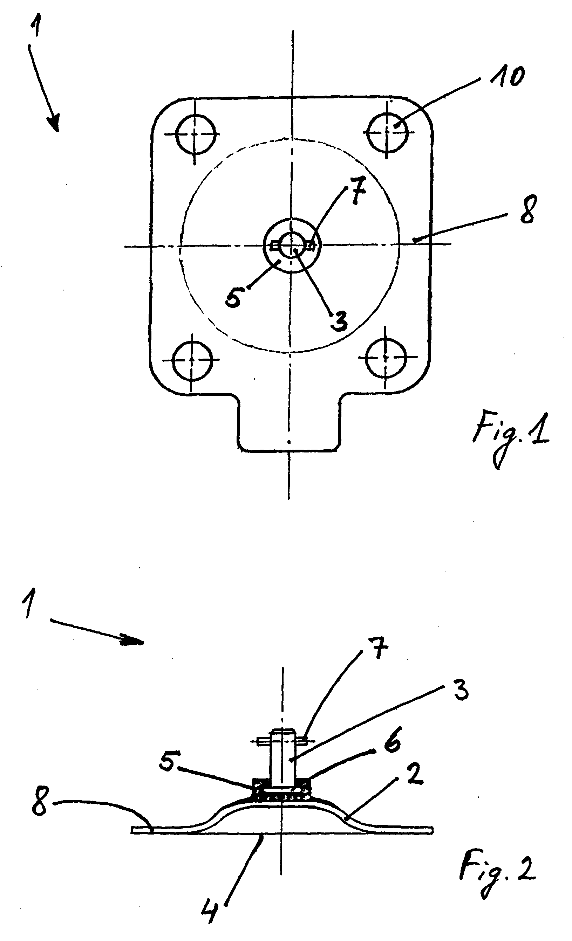

In den Figuren 1 und 2 ist schematisch eine Membrananordnung 1 dargestellt, die beispielsweise in Membranventilen eingesetzt wird. Das Membranventil selber ist nicht dargestellt. Die Membrananordnung 1 wird mit einem flachen Randbereich 8 zwischen einer sogenannten Haube eines Ventilgehäuses, in der das Betätigungsorgan angeordnet ist, und dem vom Medium durchströmten Teil des Ventilgehäuses, in dem ein Ventilsitz angeordnet ist, eingeklemmt. Vor allem, wenn das Membranventil in Leitungen mit korrosiven oder umweltschädigenden Medien eingesetzt wird, werden an die Beständigkeit der Membrananordnung 1 hohe Anforderungen gestellt. Die Membrananordnung 1 muss über die gesamte Lebensdauer eine grosse Anzahl Öffnungs-. und Schliessbewegungen ausführen, ohne das Medium in den oberen Teil des Gehäuses durch zu lassen. Der obere Teil des Ventilgehäuses, die sogenannte Haube wird mittels vier Schrauben, die durch Bohrungen 10 in dem Randbereich 8 der Membran hindurchführen, mit dem unteren Teil des Ventilgehäuses zusammengeschraubt. Die Befestigung der Membrananordnung zwischen dem oberen und dem unteren Teil des Ventilgehäuses soll möglichst so gut abgedichtet sein, dass auch an der Verbindungsstelle kein Medium entweichen kann. Im geschlossenen Zustand des Membranventils darf zwischen der Membrananordnung 1 und dem Ventilsitz kein Medium durchgelassen werden.

Die Membrananordnung 1 besteht im wesentlichen aus einer Membran 2 und einem Verbindungs- und/oder Führungsmittel 3. Der mittlere Bereich der Membran 2 ist gewölbt und kann durch die Bewegung des Verbindungs- und/oder Führungsmittels 3 auf den Sitz im unteren Teil des Ventilgehäuses gepresst werden. Die eigentliche Membran 2 kann als ein Schichtkörper aufgebaut sein. Bei hochkorrosiven Medien eignet sich ein Aufbau aus einer vom Medium berührten Schicht 4 eines mediumsbeständigen Werkstoffs, und einer weicheren, flexibleren Schicht 5. Die vom Medium berührte Schicht 4 kann aus einem fluoropolymeren Material, beispielsweise Polytetrafluoräthylen hergestellt sein. Die flexiblere Schicht 5 kann beispielsweise aus einem gummiartigen oder elastomeren Material, beispielsweise Synthesekautschuk hergestellt sein. Das Verbindungsund/oder Führungsmittel 3 wird je nach der Belastung, die vom Betätigungsorgan auf die Membrananordnung ausgeübt wird, normalerweise aus Metall hergestellt. Es müssen in der Membrananordnung 1 somit möglichst langlebige Verbindungen einerseits zwischen dem Metall 3 und dem Elastomer 5 und andererseits zwischen dem Elastomer 5 und dem Fluoropolymer 4 hergestellt werden. Diese Verbindungen werden in einem nachfolgend beschriebenen Vulkanisationsprozess hergestellt.

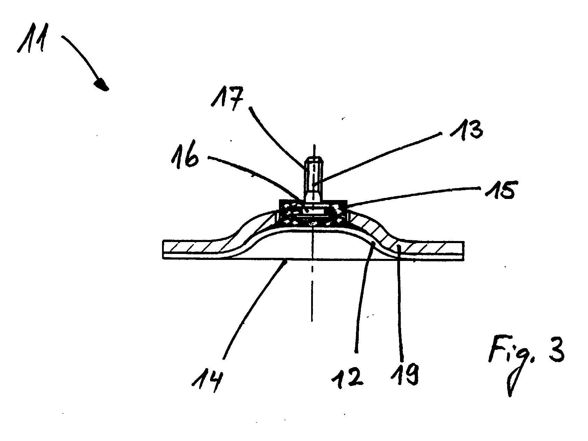

In Figur 3 ist eine ähnliche Membrananordnung 11 wie in den Figuren 1 und 2 geschnitten dargestellt. Die Membrananordnung 11 aus Figur 3 weist ebenfalls eine Fluoropolymerschicht 14 und eine Elastomerschicht 15 auf und unterscheidet sich von der Membrananordnung 1 aus den Figuren 1 und 2 durch die Form des Verbindungs- und/oder Führungsmittels 13. In Figur 2 ist das Verbindungsund/oder Führungsmittel als ein glatter Stift 3 dargestellt, der an einem ersten Ende einen flanschartigen Kopf 6 zur Befestigung an dem Elastomermaterial 5 aufweist. An dem gegenüberliegenden Ende des Stiftes 3 ist ein Querstift 7 dargestellt, der in der Art eines Bajonettverschlusses in eine dazu passende Aufnahme passt. In Figur 3 ist der Stift 13 am zweiten Ende mit einem Gewinde 17 versehen. Auf der Rückseite der Membrananordnung 11, das heisst auf der Seite der Anordnung, die nicht vom Medium berührt wird, ist in der Anordnung von Figur 3 zusätzlich eine Stützschicht 19 aus einem flexiblen elastomeren Material dargestellt.

Die Membrananordnung wird wie folgt hergestellt: Eine flache Schicht 4,14 oder eine Platte aus einem Fluoropolymermaterial wird auf einer Seite geätzt um die Haftfähigkeit zu verbessern. Aus der Platte aus dem Fluoropolymermaterial werden vorerst durch Ausstanzen Rohlinge hergestellt, die am Rand noch nicht die fertigen Aussenkonturen und die Bohrungen 8 der Membrananordnung 1 aufweisen. Durch den Ätzprozess wird die geätzte Seite braungefärbt und auch abriebfester. In einem Vulkanisationsprozess wird der Kopf 6, 16 des Stiftes 3,13 mit einer möglichst kleinen Menge Elastomermaterial 5,15 umgeben. In einem weiteren Vulkanisationsprozess bei einer Temperatur von 110 bis 190 °C, vorzugsweise bei einer Temperatur von 130 bis 160 °C, und bei einem Druck von 20 000 bis 200 000 hPa, vorzugsweise bei einem Druck von 150 000 bis 200 000 hPa, wird der so mit dem Elastomermaterial ummantelte Kopf 6,16 mit der geätzten Seite der Membran 4,14 fest verbunden. Als letzter Herstellungsschritt wird der Rohling der Membrananordnung 1,11 mit den Bohrungen 8,10 für die Befestigungsschrauben versehen, an den Aussenkonturen auf dem Endmass bearbeitet und konfektioniert. Das Elastomermaterial 5,15 wird lediglich in einem begrenzten zentralen Bereich der Membran 4,14 fest verbunden. Hierdurch werden die Scherkräfte, die an der Verbindungsstelle zwischen der Membran 4,14 und dem Stift 3,13 wirken, möglichst klein gehalten. Durch die Lagerung des Stiftes 3,13 in dem Elastomermaterial 5,15 wird die Verbindung zwischen der Membran 4,14 und dem Stift 3,13 ausreichend elastisch für die Bewegungen der Membrananordnung. Die bisherigen Ausführungen, wobei der Stift 3,13 direkt mit der Membran 4,14 aus Fluoropolymer verbunden wird, sind starr und, bedingt durch die schlechte Haftung zwischen Metall und Fluoropolymer, nicht oder nur schwach kraftschlüssig und nur wenig belastbar.

Im Ausführungsbeispiel von Figur 3 wird die Membrananordnung 11 auf der geätzten Rückseite der Membran 14 noch zusätzlich mit einer weiteren Stützschicht 19 hinterfuttert oder ausgekleidet. Diese Auskleidung 19 ist mit der Membran 14 aus Fluoropolymer nicht fest verbunden, sondern frei beweglich gegenüber der Schicht 12. Die Stützschicht 19 kann bei der Bewegung der Membrananordnung 11 über die Fluoropolymerschicht 14 gleiten und es wirken keine Scherkräfte zwischen Stützschicht 19 und Membran 14. Durch die Auskleidung oder Hinterfutterung mit der Stützschicht 19 kann die Membrananordnung 11 mit einer besseren Dichtwirkung im Ventilgehäuse eingebaut werden. Weil der Stift 3,13 in beiden Ausführungsbeispielen jeweils nur mit dem Elastomermaterial 5,15 verbunden ist, kann sowohl für die Herstellung einer Membrananordnung 1 gemäss Figur 1 als auch für die Herstellung einer Membrananordnung 11 gemäss Figur 2 das gleiche Herstellungsverfahren angewendet werden. Lediglich die Ausführung des Stiftes 3,13 (mit dem Querstift 7 oder mit dem Gewinde 17) muss dem späteren Verwendungszweck angepasst werden. Eine ähnliche Membrananordnung kann in einer der Aufgabe entsprechenden Dimensionierung auch für Membranpumpen statt für Membranventile hergestellt werden. Die Membrananordnung 1,11 zeichnet sich aus durch eine längere Lebensdauer, ein geringeres Gewicht und eine einfachere Konstruktion als die bisherigen Membrananordnungen.

## Patentansprüche

1. Membrananordnung (1,11) für Membranventile und Membranpumpen umfassend eine Membran (2,12), die auf der dem Medium ausgesetzten Seite aus einem polymeren Fluorkohlenstoffmaterial (4,14) ausgebildet ist, und ein Verbindungs- und Führungsmittel (3,13) zum Verbinden und zum Führen der Membran (2,12), wobei ein erstes Ende (6,16) des Verbindungs- und Führungsmittels (3,13) zur Verbindung mit der Membran (2,12) ausgebildet ist und wobei das zweite Ende (7,17) des Verbindungs- und Führungsmittels (3,13) zur Verbindung mit einem Betätigungsorgan des Membranventils oder der Membranpumpe verbindbar ausgebildet ist,
**dadurch gekennzeichnet, dass** das erste Ende (6,16) des Verbindungs- und Führungsmittels (3,13) form- und kraftschlüssig mit einem Material (5,15), das elastisch nachgiebiger ist als das polymere Fluorkohlenstoffmaterial (4,14), verbindbar angeordnet ist.

2. Membrananordnung nach dem Anspruch 1, **dadurch gekennzeichnet, dass** das elastisch nachgiebigere Material (5,15) als ein gummielastisches Polymer oder ein Elastomer, beispielsweise Natur- oder Synthesekautschuk, ausgebildet ist.

3. Membrananordnung nach mindestens einem der Ansprüche 1 oder 2, **dadurch gekennzeichnet, dass** auf der dem Medium ausgesetzten Seite der Membran (2,12) das polymere Fluorkohlenstoffmaterial als eine Schicht (4,14) mit einer im wesentlichen gleichbleibenden Schichtdicke ausgebildet ist.

4. Membrananordnung nach mindestens einem der Ansprüche 1 bis 3, **dadurch gekennzeichnet, dass** die Schicht (4,14) aus Fluorkohlenstoffmaterial auf der dem Medium abgewandten Seite der Membran (2,12) eine geätzte Oberflächenschicht zur Verbesserung der chemischen Reaktionsfähigkeit aufweist.

5. Membrananordnung nach mindestens einem der Ansprüche 1 bis 4, **dadurch gekennzeichnet, dass** auf der geätzten und dem Medium abgewandten Seite der Membran (2,12) eine Schicht (5,15) des elastomeren Materials angeordnet ist, wobei das elastomere Material (5,15) mit dem Fluorkohlenstoffmaterial (4,14) in einem Vulkanisationsprozess bereichsweise fest verbunden angeordnet ist.

6. Membrananordnung nach mindestens einem der Ansprüche 1 bis 5, **dadurch gekennzeichnet, dass** das elastomere Material (5,15) in einem begrenzten zentralen Bereich der Membran (2,12) fest verbunden mit dem polymeren Fluorkohlenstoffmaterial (4,14) angeordnet ist.

7. Membrananordnung nach mindestens einem der Ansprüche 1 bis 6, **dadurch gekennzeichnet, dass** das Verbindungs- und Führungsmittel als ein glatter Stift (3) ausgebildet ist, der am ersten Ende einen Kopf (6) oder eine flanschartige Verbreiterung aufweist und der am gegenüberliegenden Ende mit einem Querstift (7) zur Kupplung an einer dazupassenden Bajonettfassung des Betätigungsorgans des Ventils oder der Pumpe ausgebildet ist.

8. Membrananordnung nach mindestens einem der Ansprüche 1 bis 6, **dadurch gekennzeichnet, dass** das Verbindungs- und Führungsmittel als ein Stift (13) ausgebildet ist, der am ersten Ende einen Kopf (16) oder eine flanschartige Verbreiterung aufweist und der am gegenüberliegenden Ende mit einem Gewinde (17) zur Verschraubung an einem dazupassenden Gewinde des Betätigungsorgans des Ventils oder der Pumpe ausgebildet ist.

9. Membrananordnung nach mindestens einem der Ansprüche 1 bis 8, **dadurch gekennzeichnet, dass** das Verbindungs- und Führungsmittel (3,13) aus Metall ausgebildet ist.

10. Membrananordnung nach mindestens einem der Ansprüche 1 bis 9, **dadurch gekennzeichnet, dass** das erste Ende (6,16) des Verbindungs- und Führungsmittels (3,13) aus Metall fest verbunden mit dem elastomeren Material (5,15) im zentralen Bereich der Membran (2,12) angeordnet ist.

11. Membrananordnung nach mindestens einem der Ansprüche 1 bis 10, **dadurch gekennzeichnet, dass** die dem Medium abgewandten Seite der Membran (2,12) eine zumindest bereichsweise frei bewegliche Hinterfutterung mit einer Schicht (19) aus einem nachgiebigeren Material aufweist.

12. Verfahren zur Herstellung einer Membrananordnung nach mindestens einem der Ansprüche 1 bis 10, umfassend folgenden Schritte:
- Ätzen der dem Medium abgewandten Seite der Schicht (4,14) aus polymeren Fluorkohlenstoffmaterial,
- Ausstanzen eines Rohlings der Membran (2,12) aus dem geätzten polymeren Fluorkohlenstoffmaterial,
- Verbinden des ersten Endes (6,16) des Verbindungs- und Führungsmittels (3,13) mit dem elastomeren Material (5,15) in einem Vulkanisationsprozess,
- Verbinden des elastomeren Materials (5,15) mit dem zentralen Bereich der geätzten Seite des Rohlings aus polymerem Fluorkohlenstoffmaterial (4,14) in einem Vulkanisationsprozess bei einer Temperatur von 110 bis 190°C und bei einem Druck von 20 000 bis 200 000 hPa, und
- Konfektionieren des Rohlings durch Bohren der Bohrungen und durch Bearbeiten der Aussenkontur der Membrananordnung.

13. Verfahren zur Herstellung einer Membrananordnung nach mindestens einem der Ansprüche 1 bis 10, umfassend folgenden Schritte:
- Ätzen der dem Medium abgewandten Seite der Schicht (4,14) aus polymeren Fluorkohlenstoffmaterial,
- Ausstanzen eines Rohlings der Membran (2,12) aus dem geätzten polymeren Fluorkohlenstoffmaterial,
- Verbinden des ersten Endes (6,16) des Verbindungs- und Führungsmittels (3,13) mit dem elastomeren Material (5,15) in einem Vulkanisationsprozess,
- Verbinden des elastomeren Materials (5,15) mit dem zentralen Bereich der geätzten Seite des Rohlings aus polymerem Fluorkohlenstoffmaterial (4,14) in einem Vulkanisationsprozess bei einer Temperatur von 130 bis 160°C und bei einem Druck von 150 000 bis 200 000 hPa, und
- Konfektionieren des Rohlings durch Bohren der Bohrungen und durch Bearbeiten der Aussenkontur der Membrananordnung.

14. Verfahren zur Herstellung einer Membrananordnung nach mindestens einem der Ansprüche 1 bis 11, umfassend folgenden Schritte:
- Ätzen der dem Medium abgewandten Seite der Schicht (4,14) aus polymeren Fluorkohlenstoffmaterial,
- Ausstanzen eines Rohlings der Membran (2,12) aus dem geätzten polymeren Fluorkohlenstoffmaterial,
- Verbinden des ersten Endes (6,16) des Verbindungs- und Führungsmittels (3,13) mit dem elastomeren Material (5,15) in einem Vulkanisationsprozess,
- Verbinden des elastomeren Materials (5,15) mit dem zentralen Bereich der geätzten Seite des Rohlings aus polymerem Fluorkohlenstoffmaterial (4,14) in einem Vulkanisationsprozess bei einer Temperatur von 110 bis 190°C und bei einem Druck von 20 000 bis 200 000 hPa,
- Hinterfuttern der dem Medium abgewandten Seite der Membran (2,12) mit einer Schicht (19) aus einem nachgiebigeren Material, und
- Konfektionieren des Rohlings durch Bohren der Bohrungen und durch Bearbeiten der Aussenkontur der Membrananordnung.

15. Verfahren zur Herstellung einer Membrananordnung nach mindestens einem der Ansprüche 1 bis 11, umfassend folgenden Schritte:
- Ätzen der dem Medium abgewandten Seite der Schicht (4,14) aus polymeren Fluorkohlenstoffmaterial,
- Ausstanzen eines Rohlings der Membran (2,12) aus dem geätzten polymeren Fluorkohlenstoffmaterial,
- Verbinden des ersten Endes (6,16) des Verbindungs- und Führungsmittels (3,13) mit dem elastomeren Material (5,15) in einem Vulkanisationsprozess,
- Verbinden des elastomeren Materials (5,15) mit dem zentralen Bereich der geätzten Seite des Rohlings aus polymerem Fluorkohlenstoffmaterial (4,14) in einem Vulkanisationsprozess bei einer Temperatur von 130 bis 160°C und bei einem Druck von 150 000 bis 200 000 hPa,
- Hinterfuttern der dem Medium abgewandten Seite der Membran (2,12) mit einer Schicht (19) aus einem nachgiebigeren Material, und
- Konfektionieren des Rohlings durch Bohren der Bohrungen und durch Bearbeiten der Aussenkontur der Membrananordnung.
